# EUROPÄISCHE PATENTSCHRIFT

(11) **EP 2 896 275 B1**
(45) Veröffentlichungstag und Bekanntmachung des Hinweises auf die Patenterteilung: **22.06.2016**
(21) Anmeldenummer: 13766242.5
(22) Anmeldetag: 10.09.2013
(51) Int. Cl.: H05B 37/02

(54) **BELEUCHTUNGSSYSTEM MIT INTEGRIERTER PROJEKTIONSEINHEIT**
ILLUMINATION SYSTEM COMPRISING AN INTEGRATED PROJECTION UNIT
SYSTÈME D'ÉCLAIRAGE À MODULE DE PROJECTION INTÉGRÉ

(30) Priorität: 12.09.2012 DE 202012103472 U
(43) Veröffentlichungstag der Anmeldung: 22.07.2015
(73) Patentinhaber: Zumtobel Lighting GmbH, 6850 Dornbirn (AT)
(72) Erfinder: SIEGEL, Martin, 88131 Bodolz (DE)
(74) Vertreter: Thun, Clemens
(86) Internationale Anmeldenummer: PCT/EP2013/068691
(87) Internationale Veröffentlichungsnummer: WO 2014/040978

(56) Entgegenhaltungen:
- DE-A1-102010 032 761
- US-A1- 2002 105 623
- US-A1- 2011 191 690

## Beschreibung

Die Erfindung betrifft ein Beleuchtungssystem mit zumindest einer Beleuchtungseinrichtung und einer Projektionseinheit.

Zur manuellen Steuerung von Beleuchtungseinrichtungen werden heute typischerweise Lichtschalter, Bedienfelder oder auch zunehmend berührungsempfindliche Display benutzt. Diese sind jedoch fix im Raum oder an der jeweiligen Leuchte verbaut. Als Alternative hierzu gibt es lediglich Fernbedienungen, welche zwar nicht ortsfest sind, aber voraussetzen, dass der Benutzer diese bei sich trägt.

Eine Bedienbarkeit der Beleuchtungseinrichtungen unabhängig vom Ort des Benutzers oder des Bedienelements ist somit nicht gegeben.

Die deutsche Offenlegungsschrift DE 10 2010 023 425 A1 zeigt eine Steuereinrichtung mit Projektor. Dabei projiziert ein ortsfester Projektor an eine festgelegte Position einer Oberfläche ein Bedienelement. Eine Benutzerinteraktion mit diesem Bedienelement wird durch einen Bewegungssensor erfasst. Basierend auf einem detektierten Bewegungsmuster wird ein Bedienvorgang einer angeschlossenen Beleuchtungseinrichtung ausgelöst. Die dort gezeigte Steuereinrichtung erlaubt jedoch ebenfalls lediglich die ortsfeste Bedienung.

Der Erfindung liegt die Aufgabe zugrunde, ein Beleuchtungssystem zu schaffen, welches eine Steuerung einer Beleuchtungseinrichtung unabhängig vom Aufenthaltsort des Benutzers und unabhängig vom Montageort der Beleuchtungseinrichtung ermöglicht.

Die Aufgabe wird erfindungsgemäß für das Beleuchtungssystem für die Merkmale des unabhängigen Anspruchs 1 gelöst. Vorteilhafte Weiterbildungen sind Gegenstand der hierauf rückbezogenen Unteransprüche.

Ein erfindungsgemäßes Beleuchtungssystem verfügt zumindest über eine Steuereinrichtung, eine Projektionseinheit, eine Beleuchtungseinrichtung und eine Sensoreinheit. Die Sensoreinheit ist ausgebildet, um eine Position einer Bewegung einer Person in einem Raum zu erfassen. Die Steuereinrichtung ist ausgebildet, um in Abhängigkeit der Position der Bewegung die Projektionseinheit anzusteuern, um ein Bedienelement zur Steuerung der Beleuchtungseinrichtung auf eine Oberfläche des Raums zu projizieren. So wird gewährleistet, dass der Nutzer das Bedienelement nur dann sieht, wenn er es benötigt. Weiterhin wird so erreicht, dass er das Bedienelement von seiner Position bequem erreichen kann.

Vorzugsweise ist die Sensoreinheit ausgebildet, um eine Bedieneingabe der Person mittels des projizierten Bedienelements zu erfassen. Die Steuereinrichtung ist dann ausgebildet, um die Beleuchtungseinrichtung in Abhängigkeit der erfassten Bedieneingabe zu steuern. So wird eine einfache Bedienung der Beleuchtungseinrichtung erreicht. Darüber hinaus kann so auf herkömmliche Bedieneinrichtungen, wie Schalter verzichtet werden.

Bevorzugt weist die Sensoreinheit zumindest einen Infrarotsensor und/oder eine Kamera und/oder einen Abstandssensor auf. So wird eine genaue und einfache Erfassung der Bewegung erreicht.

Die Sensoreinheit ist vorteilhafterweise ausgebildet, um die Position zumindest einer Person im Raum zu erfassen. Die Steuereinrichtung ist dann ausgebildet, um die Beleuchtungseinrichtung in Abhängigkeit von der Position der Person im Raum zu steuern. So wird erreicht, dass die Bedieneinrichtung stets in der Nähe des Nutzer projiziert wird.

Die Sensoreinheit ist bevorzugt ausgebildet, um die Position der Beleuchtungseinrichtung im Raum zu erfassen. Die Steuereinrichtung ist dann ausgebildet, um die Beleuchtungseinrichtung in Abhängigkeit ihrer Position zu steuern. So ist es möglich Positionsveränderungen der Beleuchtungseinrichtungen ohne erneute Kalibrierung des Systems zu berücksichtigen.

Bevorzugt ist die Sensoreinheit ausgebildet, um den Reflektionsgrad zumindest einer Oberfläche im Raum zu erfassen. Die Steuereinrichtung ist dann ausgebildet, um die Beleuchtungseinrichtung in Abhängigkeit des Reflektionsgrads zu steuern. So kann eine homogene Beleuchtungsstärke in dem Raum erzielt werden.

Vorteilhafterweise ist die Sensoreinheit ausgebildet, um eine Helligkeit zumindest einer Oberfläche im Raum zu ermitteln. Die Steuereinrichtung ist dann ausgebildet, um die Beleuchtungseinrichtung in Abhängigkeit der ermittelten Helligkeit zu steuern. So kann eine homogene Beleuchtungsstärke in dem Raum erzielt werden.

Die Sensoreinheit ist bevorzugt ausgebildet, um zumindest eine teilweise Raumgeometrie des Raums zu ermitteln. So kann die Beleuchtung einfach an die Raumgeometrie angepasst werden, ohne bei jeder Veränderung der Raumgeometrie, wie z.B. durch Einsatz neuer Möbelstücke das System erneut kalibrieren zu müssen.

Die Steuereinrichtung ist bevorzugt weiterhin ausgebildet, um basierend auf der ermittelten Raumgeometrie die Oberfläche zur Projektion des Bedienelements auszuwählen. So wird sichergestellt, dass das Bedienelement an einfach zugänglichen und sichtbaren Oberflächen projiziert wird.

Die Steuereinrichtung ist vorteilhafterweise ausgebildet, um die Projektion des Bedienelements an eine Lage und Position der Oberfläche zur Projektion des Bedienelements durch Verzerrung und/oder Streckung und/oder Vergrößerung und/oder Verkleinerung anzupassen. So wird erreicht, dass das Bedienelement unabhängig von der Raumgeometrie eine einheitliche Größe und Form aufweist.

Bevorzugt ist die Steuereinrichtung ausgebildet, um basierend auf der erfassten Raumgeometrie einen geeigneten Fluchtweg zu ermitteln. Alternativ ist die Steuereinrichtung ausgebildet einen vorab bestimmten Fluchtweg vorzuhalten. Vorteilhafterweise ist die Steuereinrichtung weiterhin ausgebildet, um die Projektionseinheit derart anzusteuern, dass diese den Fluchtweg zumindest in einem Notfallbetrieb optisch hervorhebt, oder um die Beleuchtungseinrichtung derart anzusteuern, dass diese den ermittelten Fluchtweg zumindest in einem Notfallbetrieb optisch hervorhebt. So wird bei einem Notfall ein Auffinden eines geeigneten Fluchtwegs erleichtert.

Die Projektionseinheit und die Sensoreinheit sind bevorzugt in einem gemeinsamen Gehäuse verbaut. Alternativ sind die Projektionseinheit und die Sensoreinheit in getrennten Gehäusen an unterschiedlichen Positionen des Raums verbaut. So ist eine sehr flexible Ausführung des Systems möglich.

Das Beleuchtungssystem weist bevorzugt mehrere Sensoreinheiten und/oder mehrere Projektionseinheiten und/oder mehrere Beleuchtungseinrichtungen auf. So können Verdeckungen kompensiert werden.

Die Sensoreinheit ist bevorzugt ausgebildet, um bei jeder der detektierten Bewegungen zu ermitteln ob es sich bei der Bewegung um einen Bedienvorgang handelt. So können Fehlbedienungen zuverlässig ausgeschlossen werden.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: ein erstes Ausführungsbeispiel des erfindungsgemäßen Beleuchtungssystems;
- Fig. 2: ein zweites Ausführungsbeispiel des erfindungsgemäßen Beleuchtungssystems;
- Fig. 3: ein drittes Ausführungsbeispiel des erfindungsgemäßen Beleuchtungssystems;
- Fig. 4: ein viertes Ausführungsbeispiel des erfindungsgemäßen Beleuchtungssystems;
- Fig. 5: ein fünftes Ausführungsbeispiel des erfindungsgemäßen Beleuchtungssystems;
- Fig. 6: ein sechstes Ausführungsbeispiel des erfindungsgemäßen Beleuchtungssystems, und
- Fig. 7: ein siebtes Ausführungsbeispiel des erfindungsgemäßen Beleuchtungssystems.

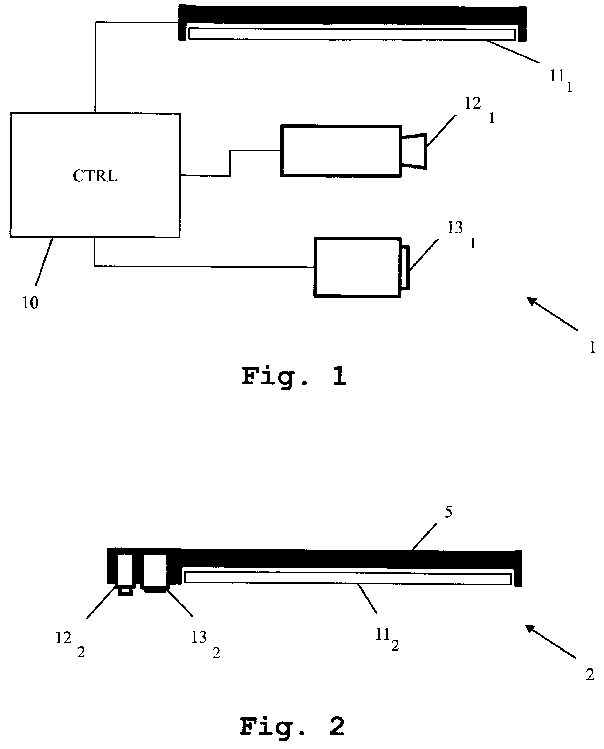

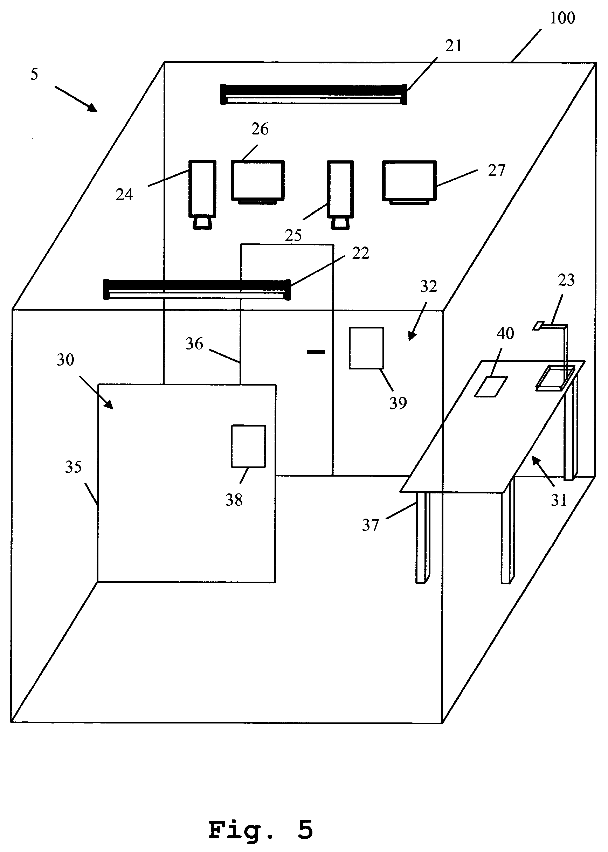

Zunächst werden anhand der Fig. 1 - Fig. 4 verschiedene prinzipielle Ausführungsweisen der Ausführungsbeispiele des erfindungsgemäßen Beleuchtungssystems gezeigt. Anhand von Fig. 5 - Fig. 7 wird anschließend auf die genauere Funktion verschiedener Ausführungsbeispiele des erfindungsgemäßen Beleuchtungssystems eingegangen. Identische Elemente wurden in ähnlichen Abbildungen zu Teil nicht wiederholt dargestellt und beschrieben.

Fig. 1 zeigt ein erstes Ausführungsbeispiel des erfindungsgemäßen Beleuchtungssystems 1. Es beinhaltet eine Steuereinrichtung 10, eine Beleuchtungseinrichtung 11₁, eine Projektionseinheit 12₁ und eine Sensoreinheit 13₁. Die Steuereinrichtung 10 ist dabei mit der Beleuchtungseinrichtung 11₁, der Projektionseinheit 12₁ und der Sensoreinheit 13₁ verbunden. Die Verbindung erfolgt dabei im hier dargestellten Ausführungsbeispiel mittels Leitungen. Auch eine Verbindung mittels drahtloser Verbindungen ist möglich.

Die Beleuchtungseinrichtung 11₁, die Projektionseinheit 12₁ und die Sensoreinheit 13₁ sind dabei jeweils in einem eigenständigen Gehäuse untergebracht. Die Steuereinrichtung 10 kann dabei ebenfalls in einem eigenständigen Gehäuse untergebracht sein. Jedoch kann auch die Steuereinrichtung 10 in einem der Gehäuse der Beleuchtungseinrichtung 11₁, der Projektionseinheit 12₁ oder der Sensoreinheit 13₁ verbaut sein.

Die Steuereinrichtung steuert dabei die Beleuchtungseinrichtung 11₁, die Projektionseinheit 12₁ und die Sensoreinheit 13₁. Dabei legt die Steuereinrichtung 10 fest, welche Bilder an welche Position durch die Projektionseinheit 12₁ dargestellt werden. Darüber hinaus verarbeitet die Steuereinrichtung 10 die Messergebnisse der Sensoreinheit 13₁. Darüber hinaus legt die Steuereinrichtung 10 fest, ob und wie stark die Beleuchtungseinrichtung 11₁ aktiviert wird.

Auf das genaue Zusammenspiel der einzelnen Elemente wird anhand von Fig. 5 - Fig. 7 näher eingegangen.

Fig. 2 zeigt ein zweites Ausführungsbeispiel des erfindungsgemäßen Beleuchtungssystems 2. In einem gemeinsamen Gehäuse 5 ist eine Beleuchtungseinrichtung 11₂, eine Projektionseinheit 12₂ und eine Sensoreinheit 13₂ integriert. Zusätzlich ist in dem Gehäuse 5 eine hier nicht dargestellte Steuereinrichtung eingebaut. Die Beleuchtungseinrichtung 11₂, die Projektionseinheit 12₂, die Sensoreinheit 13₂ und die hier nicht dargestellte Steuereinrichtung sind dabei wie auch bei Fig. 1 sichtbar miteinander verbunden. Alternativ kann die Steuereinrichtung 10 auch außerhalb des Gehäuses 5 angeordnet sein.

Die hier dargestellte Ausführung des Beleuchtungssystems 2 ist dabei für eine Deckenmontage vorgesehen. Die Projektionseinheit 12₂ und die Sensoreinheit 13₂ zeigen dabei in Richtung des Raumes nach unten. Die Beleuchtungseinrichtung 11₂ ist ebenfalls so ausgelegt, dass die Hauptabstrahlrichtung nach unten, d.h. entgegengesetzt zu der Decke ist.

Die hier dargestellte Ausführung des Beleuchtungssystems 5 kann jedoch ebenso ohne bauliche Änderungen für eine Wandmontage eingesetzt werden. Auch eine Montage an einem Möbelstück ist denkbar.

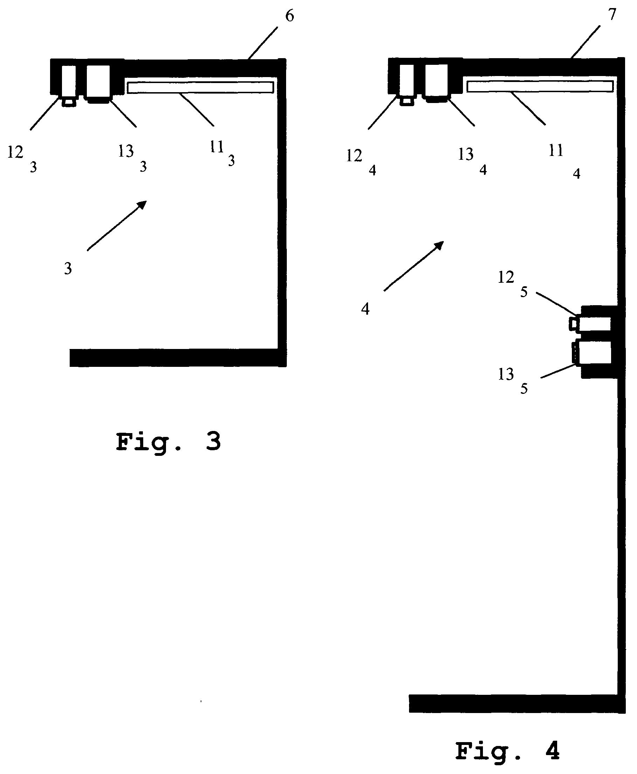

In Fig. 3 ist ein drittes Ausführungsbeispiel des erfindungsgemäßen Beleuchtungssystems 3 dargestellt. Es beinhaltet in einem gemeinsamen Gehäuse 6 eine Beleuchtungseinrichtung 11₃, eine Projektionseinheit 12₃ und eine Sensoreinheit 13₃.

Das Gehäuse 6 ist hier so ausgebildet, dass das Beleuchtungssystem eine Standleuchte, zur Aufstellung z.B. auf einem Tisch bildet. Die Projektionseinheit 12₃ und die Sensoreinheit 13₃ sind dabei in Richtung der Oberfläche, auf welche das Beleuchtungssystem 6, d.h. die Standleuchte gestellt wird, gerichtet.

In Fig. 4 ist ein viertes Ausführungsbeispiel des erfindungsgemäßen Beleuchtungssystems 4 dargestellt. Auch hier beinhaltet ein gemeinsames Gehäuse 7 eine Beleuchtungseinrichtung 11₄, eine Projektionseinheit 12₄ und eine Sensoreinheit 13₄. Das Gehäuse 7 bildet hier eine Stehleuchte, d.h. eine Leuchte die auf den Fußboden gestellt wird. Die Projektionseinheit 12₄ und die Sensoreinheit 13₄ sind dabei derart angeordnet, dass sie in Richtung des Fußbodens weisen. Zusätzlich weist das Gehäuse 7 eine zweite Projektionseinheit 12₅ und eine zweite Sensoreinheit 13₅ auf, welche an einem Fuß der Stehlampe, welcher in das Gehäuse 7 integriert ist, befestigt sind. Diese weisen in eine gegenüber dem Fußboden um 90° abweichende Richtung. Auch eine Ausrichtung in Richtung des Fußbodens ist denkbar.

Fig. 5 zeigt ein fünftes Ausführungsbeispiel des erfindungsgemäßen Beleuchtungssystems. In einem Raum 100 befinden sich ein Tisch 37 und eine Trennwand 35. Der Raum 100 weist weiterhin eine Tür 36 auf. Der Raum ist dabei nicht Teil des Beleuchtungssystems.

Das Beleuchtungssystem 5 weist dabei eine erste Beleuchtungseinrichtung 21 und eine zweite Beleuchtungseinheit 22 auf. Diese sind beide an der Decke des Raums 100 befestigt. Weiterhin sind an der Decke des Raums 100 eine erste Projektionseinheit 24 und eine zweite Projektionseinheit 25 angeordnet. Darüber hinaus sind an der Decke des Raums 100 eine erste Sensoreinheit 26 und eine zweite Sensoreinheit 27 angeordnet. Weiterhin Teil des Beleuchtungssystems 5 ist eine dritte Beleuchtungseinrichtung 23, welche in Form einer Stehleuchte auf dem Tisch 37 ausgebildet ist.

Das Beleuchtungssystem 5 weist eine Steuereinrichtung auf, welche hier nicht dargestellt ist. Der Übersichtlichkeit halber sind hier zusätzlich sämtliche Verbindungsleitungen der einzelnen Elemente des Beleuchtungssystems nicht dargestellt. Die Verbindungen erfolgen jedoch entsprechend Fig. 1. D.h., jedes einzelne Element des Beleuchtungssystems ist mit der hier nicht dargestellten Steuereinrichtung verbunden. Die Verbindung kann dabei jedoch auf drahtlos erfolgen.

Die Sensoreinheiten 26 und 27 überwachen dabei den Raum 100. Sie ermitteln dabei Positionen innerhalb des Raums 100, an welchen Bewegungen stattfinden. Sofern eine detektierte Bewegung von der Steuereinrichtung als Bedienvorgang erkannt wird, steuert die Steuereinrichtung eine der Projektionseinheiten 24, 25 derart an, dass diese ein Bedienelement auf einer hierzu geeigneten Oberfläche des Raums 100 in der Nähe der Position der detektierten Bewegung projiziert.

Dabei ermitteln die Sensoreinheiten 26, 27 zumindest eine teilweise Raumgeometrie des Raums 100, um so geeignete Oberflächen 30, 31, 32 zur Projektion der Bedienelemente 38, 39 und 40 zu ermitteln. Eine geeignete Position zur Projektion eines Bedienelements 38, 39,40 zeichnet sich dabei durch eine ebene und/oder texturarme und/oder kontrastarme und/oder helle Oberfläche aus und ist in einer für den Nutzer ergonomischen Bedienposition angeordnet. Weiterhin wird bei der Bestimmung des Orts, an welchem die Bedienelemente 38 - 40 projiziert werden beachtet, dass keine Türen verdeckt werden. Auch wird beachtet, dass keine Fenster, welche hier jedoch nicht dargestellt sind verdeckt werden.

Die Sensoreinheiten 26, 27 überwachen weiterhin die Bewegungen des Benutzers während seiner Interaktion mit den projizierten Bedienelementen 38, 39, 40. Wird eine Bewegung des Nutzers gegenüber einem Bedienelement 38 - 40 als Bedieneingabe erkannt, so wird die entsprechende Beleuchtungseinrichtung 21, 22, 23 entsprechend angesteuert.

Die projizierten Bedienelemente 38 - 40 können dabei jeweils lediglich einfache Schalter für nur die nächste Beleuchtungseinrichtung 21 - 23 sein. Alternativ können auch mehrere einfache Schalter für jede im Raum 100 angeordnete Beleuchtungseinrichtung 21 - 23 bei jedem der Bedienelemente 38 - 40 projiziert werden. Auch können die Bedienelemente 38 - 40 derart gestaltet sein, dass die Steuerung von Beleuchtungsszenarien möglich ist. Auch eine interaktive Bedienung mit wechselndem Anzeigen des jeweiligen Bedienelements 38 - 40 sind denkbar.

Wird somit beispielsweise bevor jegliches Bedienelement projiziert wird, eine Bewegung des Nutzers auf der Oberseite des Tisches 37 im Bereich der Beleuchtungseinrichtung 23 durch die Sensoreinheit 27 detektiert, so wird diese Information an die Steuereinrichtung weitergegeben. Ermittelt die Steuereinrichtung nun, dass es sich bei der Bewegung um einen Bedienvorgang, d.h. eine gezielte Bewegung mit dem Ziel die Beleuchtungssituation zu verändern handelt, so ermittelt die Steuereinrichtung, für welche Beleuchtungseinrichtung 21 - 23 eine Bedienung notwendig sein könnte. Die große räumliche Nähe der Bewegung des Nutzers zu der Beleuchtungseinrichtung 23 legt hier einen Bedienungswunsch der Beleuchtungseinrichtung 23 nahe. Die Steuereinrichtung veranlasst die Projektionseinheit 25 somit zur Projektion eines einfachen Schalters als Bedienelement 40, welcher zur Schaltung der Beleuchtungseinrichtung 23 geeignet ist.

Vollführt nun der Benutzer eine Bediengestik, z.B. ein Berühren des projizierten Schalters, so wird dies von der Sensoreinheit 27 detektiert und von der Steuereinrichtung in einem Schaltvorgang der Beleuchtungseinrichtung 23 umgesetzt.

Es kann dabei jedoch vorkommen, dass der Benutzer zwischen dem projizierten Bedienelement 38 - 40 und einer der Sensoreinheiten 26, 27 steht. In diesem Fall kann eine zuverlässige Detektion des Bedienvorgangs durch die verdeckte Sensoreinheit 26, 27 nicht erfolgen. In diesem Fall kann jedoch durch die zweite vorgehaltene Sensoreinheit 26, 27 eine zuverlässige Detektion des Bedienvorgangs erfolgen. Ebenso verhält es sich mit den Projektionseinheiten 24, 25. Verdeckt ein Nutzer eine Projektion eines Bedienelements so, übernimmt eine alternative Projektionseinheit 24, 25 die Projektion.

Dies kann entweder dadurch gewährleistet sein, dass stets sämtliche geeignete Projektionseinheiten 24, 25 sämtliche projizierte Bedienelemente projizieren. Alternativ kann auch eine Verdeckung durch die Sensoreinheiten 26, 27 detektiert werden. In diesem Fall steuert die Steuereinrichtung dann die Projektionseinheiten 24, 25 entsprechend an, um eine ununterbrochene Projektion zu erreichen.

In einer vorteilhaften Weiterbildung sind die Sensoreinheiten 26, 27 zudem ausgebildet, um das Beleuchtungsniveau in dem Raum 100 zu ermitteln. Die Ermittlung erfolgt dabei für unterschiedliche Oberflächen des Raums 100. Dabei werden die Beleuchtungseinrichtungen 21 - 23 in Abhängigkeit der ermittelten Helligkeiten der Oberflächen angesteuert. Wird z.B. festgestellt, dass die Oberfläche 31 des Tisches 37 sehr dunkel ist, so liegt eine hohe Wahrscheinlichkeit eines gewünschten Bedienvorgangs bzgl. der Beleuchtungseinrichtung 23 vor.

In einer weiteren vorteilhaften Ausgestaltung sind die Sensoreinheiten 26, 27 dazu ausgebildet, Reflexionsgrade der verschiedenen Oberflächen 30 - 32 innerhalb des Raums 100 zu ermitteln. Auch ist eine Steuerung der Beleuchtungseinrichtungen 21 - 23 basierend auf den ermittelten Reflexionsgraden möglich.

In einer weiteren vorteilhaften Ausgestaltung sind die Sensoreinheiten 26, 27 ausgebildet, um die Positionen der Beleuchtungseinrichtungen 21 - 23 im Raum zu detektieren. Es ist dann nicht notwendig, die Positionen der Beleuchtungseinrichtungen 21 - 23 der Steuereinrichtung mitzuteilen. Darüber hinaus kann so mit mobilen Beleuchtungseinrichtungen, wie z.B. batteriegetriebenen Beleuchtungseinrichtungen oder frei positionierbaren kabelbetriebenen Beleuchtungseinrichtungen gearbeitet werden, ohne nach jeder Veränderung der Position der Beleuchtungseinrichtung das System neu kalibrieren zu müssen.

Darüber hinaus ist weiterhin eine Steuerung der Lichtabstrahlcharakteristik der Beleuchtungseinrichtungen 21-23 möglich. So ermitteln die Sensoreinheiten 26, 27 die Position des Benutzers im Raum. Die Steuereinrichtung steuert anschließend die Beleuchtungseinrichtungen 21 - 23 derart an, dass die Abstrahlcharakteristik eine von dem Benutzer eingestellte Beleuchtungswirkung erreicht.

Bei der Projektion der Bedienelemente 38 - 40 wird dabei bevorzugt die Raumgeometrie berücksichtigt. D.h. es findet einen Verzerrung und/oder Streckung und/oder Vergrößerung und/oder Verkleinerung der Bedienelemente statt, um unabhängig von der Lage und Orientierung der Projektionsoberfläche 30 - 32 eine identische Größe und Form des entsprechenden Bedienelements zu erreichen.

Die Sensoreinheit 13₁ - 13₅, 26, 27 umfasst dabei zumindest einen Infrarot-Sensor und/oder eine Kamera und/oder einen Abstandsensor. Auch eine Integration weiterer Sensoren ist möglich.

Auch ist eine Montage der Sensoreinheiten 26, 27 und/oder Projektionseinheiten 24, 25 an abweichenden Positionen denkbar. So könnten diese bspw. auch an Wänden oder an Möbelstücken befestigt sein.

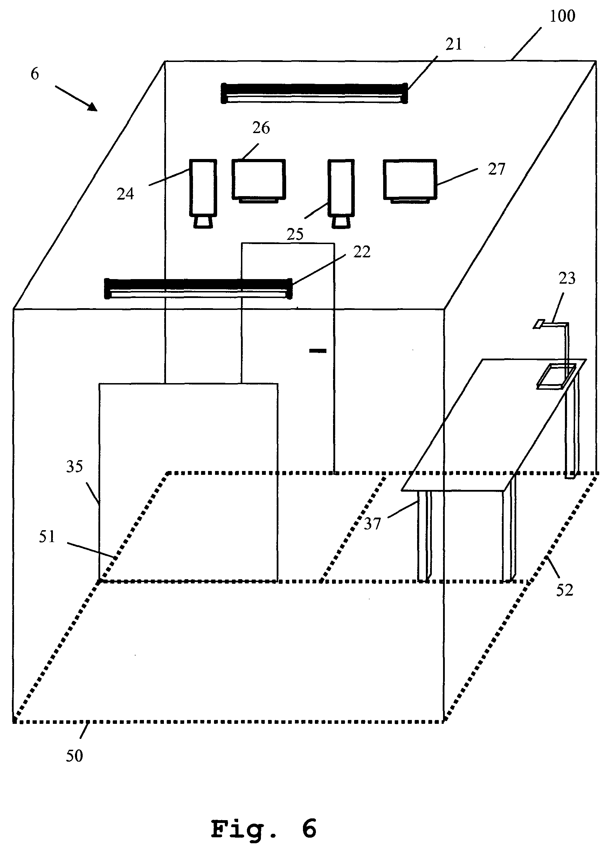

In Fig. 6 ist ein sechstes Ausführungsbeispiel des erfindungsgemäßen Beleuchtungssystems 6 dargestellt. Das Beleuchtungssystem 6 entspricht weitgehend dem Beleuchtungssystem 5. In dem hier beispielhaft gezeigten Ausführungsbeispiel wird jedoch eine zusätzliche Funktion des Beleuchtungssystems 6 gezeigt. Die Sensoreinheiten 26, 27 sind dazu ausgebildet, um aus der ermittelten Raumgeometrie Bereiche 50, 51, 52 des Raums 100 zu ermitteln. Diese Bereiche werden dabei anhand von im Raum vorkommenden Strukturen festgelegt. So ist hier der erste Bereich 50 durch die Trennwand 35 von dem zweiten Bereich 51 getrennt. Der zweite Bereich 51 umfasst den Bereich zwischen der Trennwand 35 und der Tür. Ein dritter Bereich 52 umfasst einen Bereich um den Tisch 37.

Die Sensoreinheiten 26, 27 sind hier dazu ausgebildet, um nicht nur die Position von Bewegungen im Raum 100 zu erfassen, sondern um zusätzlich die Position von Personen im Raum 100 zu erfassen. Dabei ermittelt die Steuereinrichtung anhand der detektierten Positionen von Personen im Raum 100, in welchen Bereichen 50 - 52 sich die Personen befinden. Dies wird bei der Steuerung der Beleuchtungseinrichtungen 21 - 23 berücksichtigt. Befindet sich z.B. anfangs eine Person im Bereich 52 und hat sie die Beleuchtungseinrichtung 23 aktiviert, so würde die Steuereinrichtung die Beleuchtungseinrichtung 23 deaktivieren, sobald sich die Person aus dem Bereich 52 entfernt und z.B. in den Bereich 50 tritt.

Durch die gezielte Aktivierung von Beleuchtungseinrichtungen 21 - 23 in neu genutzten Bereichen des Raums entfällt ein Bedienvorgang durch den Nutzer, durch gezieltes Deaktivieren von Beleuchtungseinrichtungen 21 - 23 in nicht länger genutzten Bereichen 50 - 52 des Raums 100 kann eine nennenswerte Menge an Energie eingespart werden.

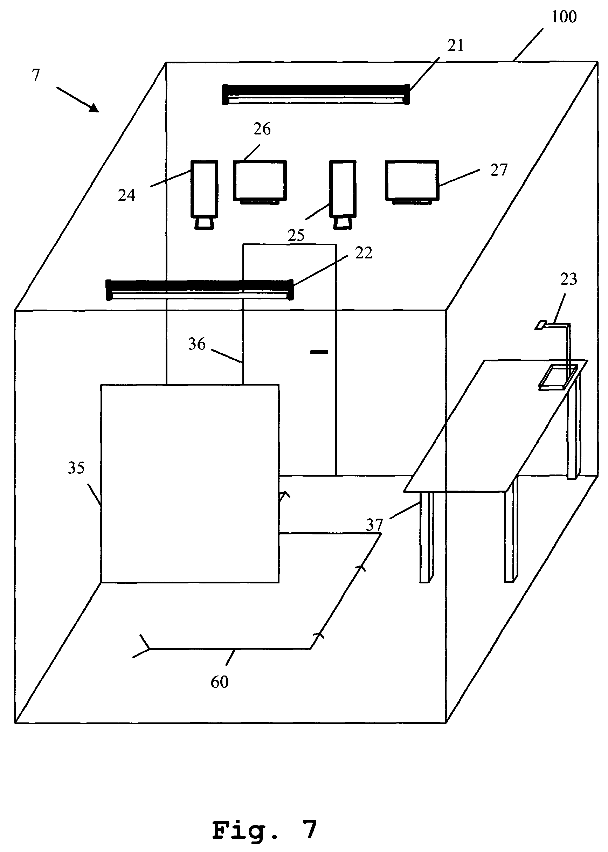

In Fig. 7 ist ein siebtes Ausführungsbeispiel des erfindungsgemäßen Beleuchtungssystems 7 dargestellt. Dieses entspricht weitgehend dem Beleuchtungssystem aus Fig. 5 und Fig. 6.

Hier ist eine zusätzliche Funktionalität dargestellt. So ermittelt die Steuereinrichtung z.B. in Zusammenarbeit mit einem Feuermelder oder anderen Sensoren, welche Teil des Beleuchtungssystems sind, ob ein Notbetrieb vorliegt. Sobald ein solcher Notbetrieb vorliegt, steuert die Steuereinrichtung die Projektionseinheiten 24, 25 derart an, dass diese einen Fluchtweg 60 in dem Raum 100 projizieren. Der Fluchtweg 60 kann dabei auf den Fußboden oder aber auch an Wänden oder auf Objekten projiziert werden. Der projizierte Fluchtweg 60 kann dabei entweder fest vorgegeben sein oder in Zusammenarbeit mit den Sensoreinheiten 26, 27 ermittelt werden. In diesem Fall bestimmen die Sensoreinheiten 26, 27 in welchen Bereichen des Raums 100 keine Hindernisse vorliegen. Die Steuereinrichtung berechnet dann von einer detektierten Position einer Person im Raum 100 einen Fluchtweg 60 zu der nächstliegenden Tür 36. Hierzu nutzt sie die ermittelte Raumgeometrie. Auch ist eine Hervorhebung des Fluchtwegs 60 durch entsprechende Ansteuerung der Beleuchtungseinrichtungen 21-23 denkbar.

Die Erfindung ist nicht auf das dargestellte Ausführungsbeispiel beschränkt. Wie bereits erwähnt, können unterschiedliche Beleuchtungseinrichtungen, Sensoreinheiten und Projektionseinheiten in das Beleuchtungssystem integriert werden. Alle vorstehend beschriebenen Merkmale oder in den Figuren gezeigten Merkmale sind im Rahmen der Erfindung beliebig vorteilhaft miteinander kombinierbar.

## Patentansprüche

1. Beleuchtungssystem (1, 2, 3, 4, 5, 6, 7) mit zumindest einer Steuereinrichtung (10), einer Projektionseinheit (12₁, 12₂, 12₃, 12₄, 12₅, 24, 25), einer Beleuchtungseinrichtung (11₁, 11₂, 11₃, 11₄, 21, 22, 23) und zumindest einer Sensoreinheit (13₁, 13₂, 13₃, 13₄, 13₅, 26, 27),
**dadurch gekennzeichnet,**
**dass** die Sensoreinheit (13₁, 13₂, 13₃, 13₄, 13₅, 26, 27) ausgebildet ist, um eine Position einer Bewegung einer Person in einem Raum (100) zu erfassen,
**dass** die Steuereinrichtung (10) ausgebildet ist, um in Abhängigkeit der Position der Bewegung die Projektionseinheit (12₁, 12₂, 12₃, 12₄, 12₅, 24, 25) anzusteuern, um ein Bedienelement (38, 39, 40) zur Steuerung der Beleuchtungseinrichtung (11₁, 11₂, 11₃, 11₄, 21, 22, 23) auf eine Oberfläche (30, 31, 32) des Raums (100) zu projizieren.

2. Beleuchtungssystem (1, 2, 3, 4, 5, 6, 7) nach Anspruch 1,
**dadurch gekennzeichnet,**
**dass** die Sensoreinheit (13₁, 13₂, 13₃, 13₄, 13₅, 26, 27) ausgebildet ist, um eine Bedieneingabe der Person mittels des projizierten Bedienelements (38, 39, 40) zu erfassen, und
**dass** die Steuereinrichtung (10) ausgebildet ist, um die Beleuchtungseinrichtung (11₁, 11₂, 11₃, 11₄, 21, 22, 23) in Abhängigkeit der erfassten Bedieneingabe zu steuern.

3. Beleuchtungssystem (1, 2, 3, 4, 5, 6, 7) nach Anspruch 1 oder 2,
**dadurch gekennzeichnet,**
**dass** die Sensoreinheit (13₁, 13₂, 13₃, 13₄, 13₅, 26, 27) zumindest einen Infrarotsensor und/oder eine Kamera und/oder einen Abstandssensor aufweist.

4. Beleuchtungssystem (1, 2, 3, 4, 5, 6, 7) nach einem der Ansprüche 1 bis 3,
**dadurch gekennzeichnet,**
**dass** die Sensoreinheit (13₁, 13₂, 13₃, 13₄, 13₅, 26, 27) ausgebildet ist, um die Position zumindest einer Person im Raum (100) zu erfassen, und
**dass** die Steuereinrichtung (10) ausgebildet ist, um die Beleuchtungseinrichtung (11₁, 11₂, 11₃, 11₄, 21, 22, 23) in Abhängigkeit von der Position der Person im Raum (100) zu steuern.

5. Beleuchtungssystem (1, 2, 3, 4, 5, 6, 7) nach einem der Ansprüche 1 bis 4,
**dadurch gekennzeichnet,**
**dass** die Sensoreinheit (13₁, 13₂, 13₃, 13₄, 13₅, 26, 27) ausgebildet ist, um die Position der Beleuchtungseinrichtung (11₁, 11₂, 11₃, 11₄, 21, 22, 23) im Raum (100) zu erfassen, und
**dass** die Steuereinrichtung (10) ausgebildet ist, um die Beleuchtungseinrichtung (11₁, 11₂, 11₃, 11₄, 21, 22, 23) in Abhängigkeit ihrer Position zu steuern.

6. Beleuchtungssystem (1, 2, 3, 4, 5, 6, 7) nach einem der Ansprüche 1 bis 5,
**dadurch gekennzeichnet,**
**dass** die Sensoreinheit (13₁, 13₂, 13₃, 13₄, 13₅, 26, 27) ausgebildet ist, um den Reflektionsgrad zumindest einer Oberfläche (30, 31, 32) im Raum zu erfassen, und dass die Steuereinrichtung (10) ausgebildet ist, um die Beleuchtungseinrichtung (11₁, 11₂, 11₃, 11₄, 21, 22, 23) in Abhängigkeit des Reflektionsgrads zu steuern.

7. Beleuchtungssystem (1, 2, 3, 4, 5, 6, 7) nach einem der Ansprüche 1 bis 6,
**dadurch gekennzeichnet,**
**dass** die Sensoreinheit (13₁, 13₂, 13₃, 13₄, 13₅, 26, 27) ausgebildet ist, um eine Helligkeit zumindest einer Oberfläche (30, 31, 32) im Raum zu ermitteln,
**dass** die Steuereinrichtung (10) ausgebildet ist, um die Beleuchtungseinrichtung (11₁, 11₂, 11₃, 11₄, 21, 22, 23) in Abhängigkeit der ermittelten Helligkeit zu steuern.

8. Beleuchtungssystem (1, 2, 3, 4, 5, 6, 7) nach einem der Ansprüche 1 bis 7,
**dadurch gekennzeichnet,**
**dass** die Sensoreinheit (13₁, 13₂, 13₃, 13₄, 13₅, 26, 27) ausgebildet ist, um zumindest eine teilweise Raumgeometrie des Raums zu ermitteln.

9. Beleuchtungssystem (1, 2, 3, 4, 5, 6, 7) nach Anspruch 8,
**dadurch gekennzeichnet,**
**dass** die Steuereinrichtung (10) ausgebildet ist, um basierend auf der ermittelten Raumgeometrie die Oberfläche (30, 31, 32) zur Projektion des Bedienelements (38, 39, 40) auszuwählen.

10. Beleuchtungssystem (1, 2, 3, 4, 5, 6, 7) nach Anspruch 8 oder 9,
**dadurch gekennzeichnet,**
**dass** die Steuereinrichtung (10) ausgebildet ist, um die Projektion des Bedienelements (38, 39, 40) an eine Lage und Position der Oberfläche (30, 31, 32) zur Projektion des Bedienelements (38, 39, 40) durch Verzerrung und/oder Streckung und/oder Vergrößerung und/oder Verkleinerung anzupassen.

11. Beleuchtungssystem (1, 2, 3, 4, 5, 6, 7) nach einem der Ansprüche 8 bis 10,
**dadurch gekennzeichnet,**
**dass** die Steuereinrichtung (10) ausgebildet ist, um basierend auf der erfassten Raumgeometrie einen geeigneten Fluchtweg (60) zu ermitteln, oder
**dass** die Steuereinrichtung (10) ausgebildet ist einen vorab bestimmten Fluchtweg (60) vorzuhalten.

12. Beleuchtungssystem (1, 2, 3, 4, 5, 6, 7) nach Anspruch 11,
**dadurch gekennzeichnet,**
**dass** die Steuereinrichtung (10) weiterhin ausgebildet ist, um die Projektionseinheit (12₁, 12₂, 12₃, 12₄, 12₅, 24, 25) derart anzusteuern, dass diese den Fluchtweg (60) zumindest in einem Notfallbetrieb optisch hervorhebt, oder um die Beleuchtungseinrichtung (11₁, 11₂, 11₃, 11₄, 21, 22, 23) derart anzusteuern, dass diese den ermittelten Fluchtweg (60) zumindest in einem Notfallbetrieb optisch hervorhebt.

13. Beleuchtungssystem (1, 2, 3, 4, 5, 6, 7) nach einem der Ansprüche 1 bis 12,
**dadurch gekennzeichnet,**
**dass** die Projektionseinheit (12₂, 12₃, 12₄, 12₅, 24, 25) und die Sensoreinheit (13₂, 13₃, 13₄, 13₅, 26, 27) in einem gemeinsamen Gehäuse verbaut sind, oder
**dass** die Projektionseinheit (12₁) und die Sensoreinheit (13₁) in getrennten Gehäusen an unterschiedlichen Positionen des Raums verbaut sind.

14. Beleuchtungssystem (1, 2, 3, 4, 5, 6, 7) nach einem der Ansprüche 1 bis 13,
**dadurch gekennzeichnet,**
**dass** das Beleuchtungssystem (4, 5, 6, 7) mehrere Sensoreinheiten (13₄, 13₅, 26, 27) und/oder mehrere Projektionseinheiten (12₄, 12₅, 24, 25) und/oder mehrere Beleuchtungseinrichtungen (21, 22, 23) aufweist.

15. Beleuchtungssystem (1, 2, 3, 4, 5, 6, 7) nach einem der Ansprüche 1 bis 14,
**dadurch gekennzeichnet,**
**dass** die Sensoreinheit (13₁, 13₂, 13₃, 13₄, 13₅, 26, 27) ausgebildet ist, um bei jeder der detektierten Bewegungen zu ermitteln ob es sich bei der Bewegung um einen Bedienvorgang handelt.

## Claims

1. Lighting system (1, 2, 3, 4, 5, 6, 7) with at least one control device (10), a projection unit (12₁, 12₂, 12₃, 12₄, 12₅, 24, 25), an illumination device (11₁, 11₂, 11₃, 11₄, 21, 22, 23) and at least one sensor unit (13₁, 13₂, 13₃, 13₄, 13₅, 26, 27),
**characterized in that**,
the sensor unit (13₁, 13₂, 13₃, 13₄, 13₅, 26, 27) is designed to detect the position of a movement of a person in a space (100),
the control device (10) is designed to control the projection unit (12₁, 12₂, 12₃, 12₄, 12₅, 24, 25) as a function of the position of the movement, in order to project an operating element (38, 39, 40) onto a surface (30, 31, 32) of the space (100) in order to control the illumination device (11₁, 11₂, 11₃, 11₄, 21, 22, 23).

2. Lighting system (1, 2, 3, 4, 5, 6, 7) according to claim 1,
**characterized in that**,
the sensor unit (13₁, 13₂, 13₃, 13₄, 13₅, 26, 27) is designed to detect an operational input of the person by means of the projected operating element (38, 39, 40), and
the control device (10) is designed to control the illumination device (11₁, 11₂, 11₃, 11₄, 21, 22, 23) as a function of the detected operational input.

3. Lighting system (1, 2, 3, 4, 5, 6, 7) according to claim 1 or 2,
**characterized in that**,
the sensor unit (13₁, 13₂, 13₃, 13₄, 13₅, 26, 27) comprises at least one infrared sensor and/or a camera and/or a distance sensor.

4. Lighting system (1, 2, 3, 4, 5, 6, 7) according to one of the claims 1 to 3,
**characterized in that**,
the sensor unit (13₁, 13₂, 13₃, 13₄, 13₅, 26, 27) is designed to detect the position of at least one person in the space (100), and
the control device (10) is configured to control the illumination device (11₁, 11₂, 11₃, 11₄, 21, 22, 23) as a function of the position of the person in the space (100).

5. Lighting system (1, 2, 3, 4, 5, 6, 7) according to one of the claims 1 to 4,
**characterized in that**,
the sensor unit (13₁, 13₂, 13₃, 13₄, 13₅, 26, 27) is designed to detect the position of the illumination device (11₁, 11₂, 11₃, 11₄, 21, 22, 23) in the space (100), and
the control device (10) is configured to control the illumination device (11₁, 11₂, 11₃, 11₄, 21, 22, 23) as a function of its position.

6. Lighting system (1, 2, 3, 4, 5, 6, 7) according to one of the claims 1 to 5,
**characterized in that**,
the sensor unit (13₁, 13₂, 13₃, 13₄, 13₅, 26, 27) is designed to detect the degree of reflectance of at least one surface (30, 31, 32) in the space, and that the control device (10) is designed to control the illumination device (11₁, 11₂, 11₃, 11₄, 21, 22, 23) as a function of the degree of reflection.

7. Lighting system (1, 2, 3, 4, 5, 6, 7) according to one of the claims 1 to 6,
**characterized in that**,
the sensor unit (13₁, 13₂, 13₃, 13₄, 13₅, 26, 27) is designed to determine a brightness of at least one surface (30, 31, 32) in the space,
the control device (10) is designed to control the illumination device (11₁, 11₂, 11₃, 11₄, 21, 22, 23) as a function of the determined brightness.

8. Lighting system (1, 2, 3, 4, 5, 6, 7) according to one of the claims 1 to 7,
**characterized in that**,
the sensor unit (13₁, 13₂, 13₃, 13₄, 13₅, 26, 27) is designed to determine at least a partial spatial geometry of the room.

9. Lighting system (1, 2, 3, 4, 5, 6, 7) according to claim 8,
**characterized in that**,
the control device (10) is designed to select the surface (30, 31, 32) for projecting the operating element (38, 39, 40) based on the determined room geometry.

10. Lighting system (1, 2, 3, 4, 5, 6, 7) according to claim 8 or 9,
**characterized in that**,
the control device (10) is designed to adapt the projection of the operating element (38, 39, 40) to a location and position of the surface (30, 31, 32) for projecting the operating element (38, 39, 40) through distortion and/or stretching and/or enlargement and/or reduction.

11. Lighting system (1, 2, 3, 4, 5, 6, 7) according to one of the claims 8 to 10,
**characterized in that**,
the control device (10) is designed to determine a suitable escape route (60) based on the detected spatial geometry, or
the control device (10) is designed to reserve a predetermined escape route (60).

12. Lighting system (1, 2, 3, 4, 5, 6, 7) according to claim 11,
**characterized in that**,
the control device (10) is further designed to so control the projection unit (12₁, 12₂, 12₃, 12₄, 12₅, 24, 25) that the latter visually highlights the escape route (60) at least during emergency operation, or to so control the illumination device (11₁, 11₂, 11₃, 11₄, 21, 22, 23) that the latter visually highlights the escape route (60) at least during emergency operation.

13. Lighting system (1, 2, 3, 4, 5, 6, 7) according to one of the claims 1 to 12,
**characterized in that**,
the projection unit (12₂, 12₃, 12₄, 12₅, 24, 25) and the sensor unit (13₂, 13₃, 13₄, 13₅, 26, 27) are installed in a common housing, or
the projection unit (12₁) and the sensor unit (13₁) are installed in separate housings at different positions in the space.

14. Lighting system (1, 2, 3, 4, 5, 6, 7) according to one of the claims 1 to 13,
**characterized in that**,
the illumination system (4, 5, 6, 7) comprises a plurality of sensor units (13₄, 13₅, 26, 27) and/or a plurality of projection units (12₄, 12₅, 24, 25) and/or a plurality of illumination devices (21, 22, 23).

15. Lighting system (1, 2, 3, 4, 5, 6, 7) according to one of the claims 1 to 14,
**characterized in that**,
the sensor unit (13₁, 13₂, 13₃, 13₄, 13₅, 26, 27) is designed to determine whether the movement is a control operation for each of the detected movements.

## Revendications

1. Système d'éclairage (1, 2, 3, 4, 5, 6, 7) avec au moins un dispositif de commande (10), une unité de projection (12₁, 12₂, 12₃, 12₄, 12₅, 24, 25), un dispositif d'éclairage (11₁, 11₂, 11₃, 11₄, 21, 22, 23) et au moins une unité de capteur (13₁, 13₂, 13₃, 13₄, 13₅, 26, 27),
**caractérisé en ce que**
l'unité de capteur (13₁, 13₂, 13₃, 13₄, 13₅, 26, 27) est constituée pour détecter une position d'un mouvement d'une personne dans un espace (100),
**en ce que** le dispositif de commande (10) est constitué pour, en fonction de la position du mouvement, piloter l'unité de projection (12₁, 12₂, 12₃, 12₄, 12₅, 24, 25) pour projeter un élément de manoeuvre (38, 39, 40) pour la commande du dispositif d'éclairage (11₁, 11₂, 11₃, 11₄, 21, 22, 23) sur une surface (30, 31, 32) de l'espace (100).

2. Système d'éclairage (1, 2, 3, 4, 5, 6, 7) selon la revendication 1,
**caractérisé en ce que**
l'unité de capteur (13₁, 13₂, 13₃, 13₄, 13₅, 26, 27) est constituée pour détecter une entrée de manoeuvre de la personne au moyen de l'élément de manoeuvre (38, 39, 40) projeté, et
**en ce que** le dispositif de commande (10) est constitué pour commander le dispositif d'éclairage (11₁, 11₂, 11₃, 11₄, 21, 22, 23) en fonction de l'entrée de manoeuvre détectée.

3. Système d'éclairage (1, 2, 3, 4, 5, 6, 7) selon la revendication 1 ou 2,
**caractérisé en ce que**
l'unité de capteur (13₁, 13₂, 13₃, 13₄, 13₅, 26, 27) présente au moins un capteur infrarouge et/ou une caméra et/ou un capteur de distance.

4. Système d'éclairage (1, 2, 3, 4, 5, 6, 7) selon l'une des revendications 1 à 3,
**caractérisé en ce que**
l'unité de capteur (13₁, 13₂, 13₃, 13₄, 13₅, 26, 27) est constituée pour détecter la position d'au moins une personne dans l'espace (100), et
**en ce que** le dispositif de commande (10) est constitué pour commander le dispositif d'éclairage (11₁, 11₂, 11₃, 11₄, 21, 22, 23) en fonction de la personne dans l'espace (100).

5. Système d'éclairage (1, 2, 3, 4, 5, 6, 7) selon l'une des revendications 1 à 4,
**caractérisé en ce que**
l'unité de capteur (13₁, 13₂, 13₃, 13₄, 13₅, 26, 27) est constituée pour détecter la position du dispositif d'éclairage (11₁, 11₂, 11₃, 11₄, 21, 22, 23) dans l'espace (100), et
**en ce que** le dispositif de commande (10) est constitué pour commander le dispositif d'éclairage (11₁, 11₂, 11₃, 11₄, 21, 22, 23) en fonction de la position de celui-ci.

6. Système d'éclairage (1, 2, 3, 4, 5, 6, 7) selon l'une des revendications 1 à 5,
**caractérisé en ce que**
l'unité de capteur (13₁, 13₂, 13₃, 13₄, 13₅, 26, 27) est constituée pour détecter le degré de réflexion d'au moins une surface (30, 31, 32) dans l'espace, et
**en ce que** le dispositif de commande (10) est constitué pour commander le dispositif d'éclairage (11₁, 11₂, 11₃, 11₄, 21, 22, 23) en fonction du degré de réflexion.

7. Système d'éclairage (1, 2, 3, 4, 5, 6, 7) selon l'une des revendications 1 à 6,
**caractérisé en ce que**
l'unité de capteur (13₁, 13₂, 13₃, 13₄, 13₅, 26, 27) est constituée pour déterminer une luminosité d'au moins une surface (30, 31, 32) dans l'espace,
**en ce que** le dispositif de commande (10) est constitué pour commander le dispositif d'éclairage (11₁, 11₂, 11₃, 11₄, 21, 22, 23) en fonction de la luminosité déterminée.

8. Système d'éclairage (1, 2, 3, 4, 5, 6, 7) selon l'une des revendications 1 à 7,
**caractérisé en ce que**
l'unité de capteur (13₁, 13₂, 13₃, 13₄, 13₅, 26, 27) est constituée pour déterminer au moins une géométrie spatiale partielle de l'espace.

9. Système d'éclairage (1, 2, 3, 4, 5, 6, 7) selon la revendication 8,
**caractérisé en ce que**
le dispositif de commande (10) est constitué pour, sur la base de la géométrie spatiale déterminée, sélectionner la surface (30, 31, 32) pour la projection de l'élément de manoeuvre (38, 39, 40).

10. Système d'éclairage (1, 2, 3, 4, 5, 6, 7) selon la revendication 8 ou 9,
**caractérisé en ce que**
le dispositif de commande (10) est constitué pour adapter la projection de l'élément de manoeuvre (38, 39, 40) à un emplacement et une position de la surface (30, 31, 32) pour la projection de l'élément de manoeuvre (38, 39, 40) par distorsion et/ou extension et/ou agrandissement et/ou réduction.

11. Système d'éclairage (1, 2, 3, 4, 5, 6, 7) selon l'une des revendications 8 à 10,
**caractérisé en ce que**
le dispositif de commande (10) est constitué pour, sur la base de la géométrie spatiale détectée, déterminer une voie d'évacuation (60) appropriée, ou
**en ce que** le dispositif de commande (10) est constitué pour présenter une voie d'évacuation (60) définie au préalable.

12. Système d'éclairage (1, 2, 3, 4, 5, 6, 7) selon la revendication 11,
**caractérisé en ce que**
le dispositif de commande (10) est également constitué pour piloter l'unité de projection (12₁, 12₂, 12₃, 12₄, 12₅, 24, 25) de telle sorte que celle-ci met optiquement en évidence la voie d'évacuation (60) au moins dans un mode d'urgence, ou bien pour piloter le dispositif d'éclairage (11₁, 11₂, 11₃, 11₄, 21, 22, 23) de telle sorte que celui-ci met optiquement en évidence la voie d'évacuation (60) déterminée au moins dans un mode d'urgence.

13. Système d'éclairage (1, 2, 3, 4, 5, 6, 7) selon l'une des revendications 1 à 12,
**caractérisé en ce que**
l'unité de projection (12₁, 12₂, 12₃, 12₄, 12₅, 24, 25) et l'unité de capteur (13₁, 13₂, 13₃, 13₄, 13₅, 26, 27) sont montées dans un boîtier commun, ou
**en ce que** l'unité de projection (12₁) et l'unité de capteur (13₁) sont montées dans des boîtiers séparés dans des positions différentes de l'espace.

14. Système d'éclairage (1, 2, 3, 4, 5, 6, 7) selon l'une des revendications 1 à 13,
**caractérisé en ce que**
le système d'éclairage (4, 5, 6, 7) présente plusieurs unités de capteur (13₄, 13₅, 26, 27) et/ou plusieurs unités de projection (12₄, 12₅, 24, 25) et/ou plusieurs dispositifs d'éclairage (21, 22, 23).

15. Système d'éclairage (1, 2, 3, 4, 5, 6, 7) selon l'une des revendications 1 à 14,
**caractérisé en ce que**
l'unité de capteur (13₁, 13₂, 13₃, 13₄, 13₅, 26, 27) est constituée pour déterminer, pour chacun des mouvements détectés, s'il s'agit, concernant le mouvement, d'un processus de manoeuvre.
